# EUROPEAN PATENT APPLICATION

(11) **EP 4 678 005 A1**
(43) Date of publication of application: **14.01.2026**
(21) Application number: 25184305.8
(22) Date of filing: 20.06.2025
(51) Int. Cl.: A21C 3/06, A21C 9/06

(54) **MACHINE FOR ROLLING UP PIECES OF FOOD DOUGH**

(30) Priority: 12.07.2024 IT 202400016216
(71) Applicant: Robotica & Microtecnica S.n.c. di Zamboni Roberto & C., 25010 Sirmione Brescia (IT)
(72) Inventor: ZAMBONI, Roberto, 25010 Sirmione (Brescia) (IT)
(74) Representative: Anselmi, Davide

(57) **Abstract**

A machine (10) for rolling up pieces (P) of food dough comprises a conveyor (20) comprising a receiving zone (210) of the piece (P), and a centring zone (220) of the same piece, rolling up means (30) configured to receive and roll up each centred piece (P) of dough on itself, so as to achieve a wrapping of the food dough. The machine further comprises orientation means (40) positioned in said centring zone (220), and configured to accommodate a piece (P) to orient it according to a predefined direction; and wherein the conveyor (20) is configured to transport the piece (P) arranged in said receiving zone (210) towards said orientation means (40) so as to orient it according to a predefined direction by means of a combined movement of an impact and a sliding against the orientation means (40). Wherein said orientation means (40) comprises a body, at least in part, counter-shaped to the piece (P) of food dough and oriented as a function of said predefined direction; and wherein said body has a substantially wedge-shaped or "V-shaped" form, having an enlarged end (410) turned towards said receiving zone (210), and a tapered end (420) opposite the enlarged end (410) so as to obtain a shape coupling between said body and each piece (P) of food dough in order to orient the latter.

## Description

### TECHNICAL FIELD

The present invention relates to a machine for rolling up pieces of food dough, in particular strips of food dough shaped in a triangular shape.

In more detail, the machine according to the present invention is included in the field of manufacture and marketing of machines, apparatuses and, more generally, systems for shaping and/or processing food dough, in particular intended for the production of artisanal and/or industrial confectionery products.

The machine according to the present invention has a specific application in the sector of machinery for the confectionery industry intended for rolling up or wrapping strips of triangular food dough, for the production of croissants and/or cornets and/or brioches or similar, in particular suitable for being installed in an artisanal workshop or bakery, i.e. with smaller dimensions than an industrial production environment or in an environment in the large-scale retail trade, such as an industrial production workshop.

### STATE OF THE ART

In the technical field of reference, the use of machines or apparatuses for rolling up strips of food dough is known, in particular having a substantially triangular shape (but also square and/or rectangular), for the production of the confectionery products indicated here above (i.e. croissants and/or cornets and/or brioches), suitable for subsequently being filled, for example with jam.

These machines can be of the automatic or semi-automatic type.

A machine for rolling up strips of food dough of the known type typically comprises at least one conveyor belt extending along a longitudinal direction and movable along it. Said conveyor belt comprises a receiving zone for receiving the piece of food dough, which is made to fall through by force of gravity from a raised position with respect to the conveyor belt. Alternatively, the piece P of food dough can be rested on the receiving zone and retained manually by an operator, in order then to be released by said operator.

Subsequently, the piece of food dough is moved from the conveyor belt and rolled up on itself by means of rolling up means cooperating with said conveyor belt.

The machine for rolling up pieces of food dough of the known type briefly described above has proved, in practice, to have drawbacks.

In particular, the main drawback lies in the fact that machines for rolling up pieces of food dough of the known type do not allow the pieces of food dough to be rolled up precisely and repetitively for a high number of operating cycles of the machine, since the final result that such known machines obtain is strictly dependent upon the manual skills of the operator (i.e. the pastry chef). In particular, the manual ability of the operator can change over time, as the operator is not able to move each piece of dough manually in the same way. In addition, the operator can change over time, i.e. be replaced by a different operator, with a final result even more different with respect to the previous operator.

The result is therefore that these known machines do not allow final products (e.g. croissant and/or cornets and/or brioches) to be obtained that are substantially identical to each other constantly over time, and therefore having a high visual impact in the eyes of the final consumer.

A further drawback lies in the fact that the machines for rolling up pieces of food dough of the known type, in particular in the case of automatic machines, are cumbersome and/or not very compact. In fact, these machines typically have dimensions such as to make their installation difficult in pastry shops or in artisanal confectionery production environments, i.e. with reduced dimensions (for example, similar to a production workshop). As a result, the machines of the known type are complex and costly, and therefore beyond the financial reach of the aforementioned production environments. In addition, these known machines require complex and costly maintenance interventions in the case of stops and/or breakages, performed by specialised personnel, which contributes to increasing the overall cost of management and use of the machine.

A further drawback lies in the fact that the machines for rolling up pieces of food dough of the known type do not allow a precise monitoring of the temperature of the portions of food dough during their processing.

### OBJECTS OF THE INVENTION

The object of the present invention is to provide a machine for rolling up pieces of food dough that allows the drawbacks of the aforementioned prior art to be overcome.

A further object of the present invention is to provide a machine for rolling up pieces of food dough that is compact and/or small in size, i.e. that has reduced dimensions with respect to the machines of the prior art, so as to be installed and arranged in environments with reduced dimensions, such as, for example, a room of a confectionery workshop, or an artisanal pastry shop.

A further object of the present invention is to provide a machine for rolling up pieces of food dough that is simple and economical, i.e. having a competitive market price, meaning lower than the price of the machines of the known type.

A further object of the present invention is to provide a machine for rolling up pieces of food dough that allows products substantially identical to each other to be obtained in a repetitive and constant manner over time for a high number of cycles, so as to minimise any processing imperfections and/or errors and/or waste, and additionally in a manner independent of the manual skill of an operator. In other words, the quality and/or shape/geometry of the final confectionery products is independent of the operator who uses the machine.

A further object of the present invention is to provide a machine for rolling up pieces of food dough that has an alternative and/or improved configuration, both in structural and in functional terms, compared to the known traditional solutions.

### SUMMARY

All the objects, both individually and in any combination thereof, and others that will result from the detailed description that follows, are reached, according to the invention, with a machine for rolling up pieces of food dough having the characteristics indicated in independent claim 1.

The dependent claims outline particularly advantageous embodiments of the invention.

### BRIEF DESCRIPTION OF THE DRAWINGS

Further characteristics and advantages of the present invention will become more apparent from the indicative and therefore non-limiting description of a preferred, but not exclusive, embodiment of a machine for rolling up pieces of food dough, as illustrated in the accompanying drawings, in which:
- Figure 1 shows, according to a perspective view, a machine for rolling up pieces of food dough according to an embodiment of the invention;
- Figures 2, 3 and 4 show respectively, according to a top plan view, the machine illustrated in Figure 1 in multiple working operating configurations;
- Figure 5A shows, according to a side view, the machine illustrated in Figure 1;
- Figure 5B shows, according to a detailed schematic view, a part of the machine illustrated in Figure 5A.

With reference to the drawings, they serve solely to illustrate embodiments of the invention for the purpose of better clarifying, in combination with the description, the inventive principles at the basis of the invention.

### DETAILED DESCRIPTION OF THE INVENTION

With reference to the appended figures, a machine for rolling up pieces of food dough according to the present invention has been indicated in its entirety with the number 10.

In the description below, specific reference will be made to a machine 10 capable of rolling up pieces of food dough shaped in strips (i.e. having a thickness that is substantially negligible with respect to the other dimensions) and having a substantially triangular shape, specifically intended for the production of confectionery products, such as croissants and/or cornets and/or brioches in particular.

The machine 10 according to the invention can, however, also be used for processing pieces of food dough shaped in strips having a different shape with respect to those cited above, for example square and/or rectangular, and also pieces of pasta dough shaped in any form, without thus departing from the scope of protection.

The machine 10 according to the invention is intended particularly to be operatively installed in a pastry shop of the artisanal type, i.e. in a confectionery production environment of reduced dimensions or at least smaller ones than an industrial type environment, i.e. one intended to produce a high number of confectionery products per unit of time, compared to an artisanal pastry shop.

However, the machine 10 according to the invention can also be used at industrial level without thus departing from the scope of protection.

In accordance with an embodiment shown in the appended figures, the machine 10 for rolling up pieces P of food dough, in particular croissants and/or cornets and/or brioches, comprises a conveyor 20 extending and movable along a work axis Y-Y and comprising a receiving zone 210 for receiving the piece P of food dough, and a centring zone 220 for centring said piece P.

As shown in the figures, the conveyor 20 extends, in a substantially straight manner, between a first end 20a and a second end 20b opposite to the first end 20a.

Preferably, the aforesaid centring zone 220 for centring the pieces P of food dough is arranged at the first end 20a of the conveyor 20.

Preferably, the conveyor 20 is of the conveyor belt type and has a substantially planar surface, i.e. parallel to the ground, and suitable for accommodating and transporting the pieces P of food dough from the first end 20a towards the second end 20b and vice versa.

The machine 10 further comprises rolling up means 30 (described in more detail in the description below) associated with the conveyor 20, and configured to receive and roll up each centred piece P of dough on itself, so as to obtain a rolling up of the food dough, in particular a croissant or a cornet or a brioche, to be subjected to subsequent processing steps, such as, for example, their baking in an oven to obtain a final confectionery product ready for consumption by a consumer.

As illustrated in the appended figures, the rolling up means 30 is preferably arranged proximal to the second end 20b of the conveyor 20 and cooperates with it.

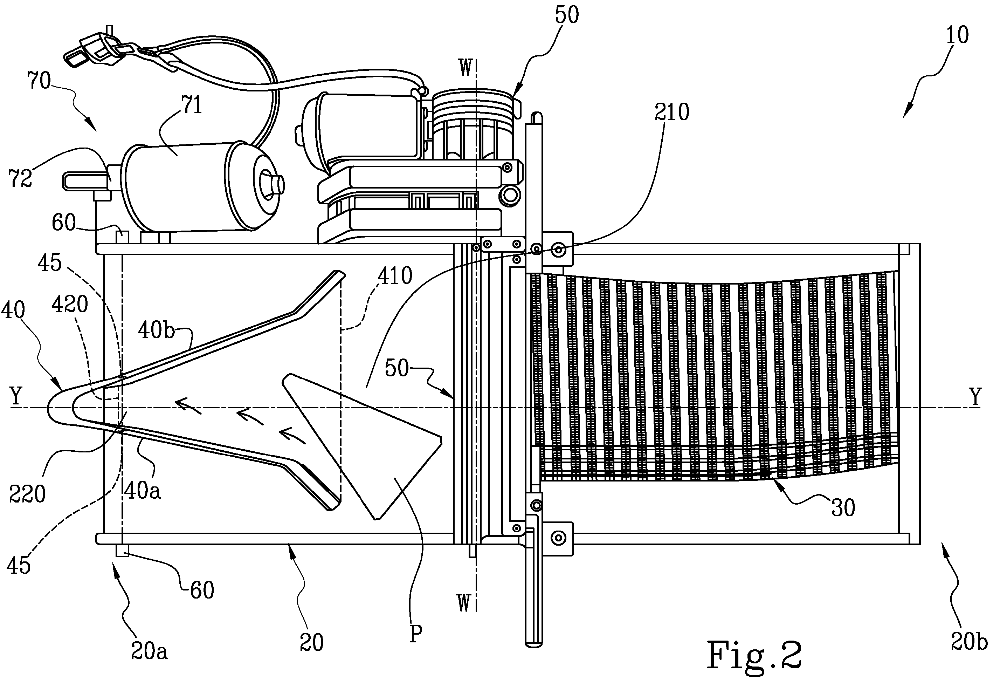

In accordance with the embodiment illustrated in particular in Figures 2-4, the machine 10 comprises orientation means 40 associated with the conveyor 20, positioned in the centring zone 220 (i.e. at the first end 20a), and configured to accommodate a piece P of food dough to orient it according to a predefined direction.

Preferably, such predefined direction is substantially parallel to the work axis Y-Y of the conveyor 20.

However, said predefined direction can be oriented in a different manner with respect to the work axis Y-Y, i.e. arranged inclined with respect to it. According to an aspect of the invention, the conveyor 20 is configured to transport a piece P of food dough arranged in the receiving zone 210 towards the orientation means 40 so as to orient it according to the predefined direction, by means of a combined movement of an impact and a sliding against the orientation means 40.

In other words, the orientation means 40 is arranged according to an orientation thereof corresponding with the predefined direction of orientation, so as to give each piece P of food dough a desired orientation that is the same as the orientation of the orientation means 40 itself. Advantageously, following the interaction with the orientation means 40, each piece P of food dough is perfectly oriented in accordance with a desired direction of orientation, therefore reducing to the minimum any misalignment and/or any non-centred (and therefore undesired) arrangements, with a consequent reduction in processing or shaping errors on the final wrapped pieces P of food dough.

In fact, these are rolled up on themselves in a substantially identical way to each other, without imperfections and/or defects in their final wrapped state. The result is the obtaining of finished confectionery products (such as those cited above) that are substantially identical to each other and substantially without malformations in their shape and/or geometry, and therefore having a high visual impact in the eyes of a final consumer.

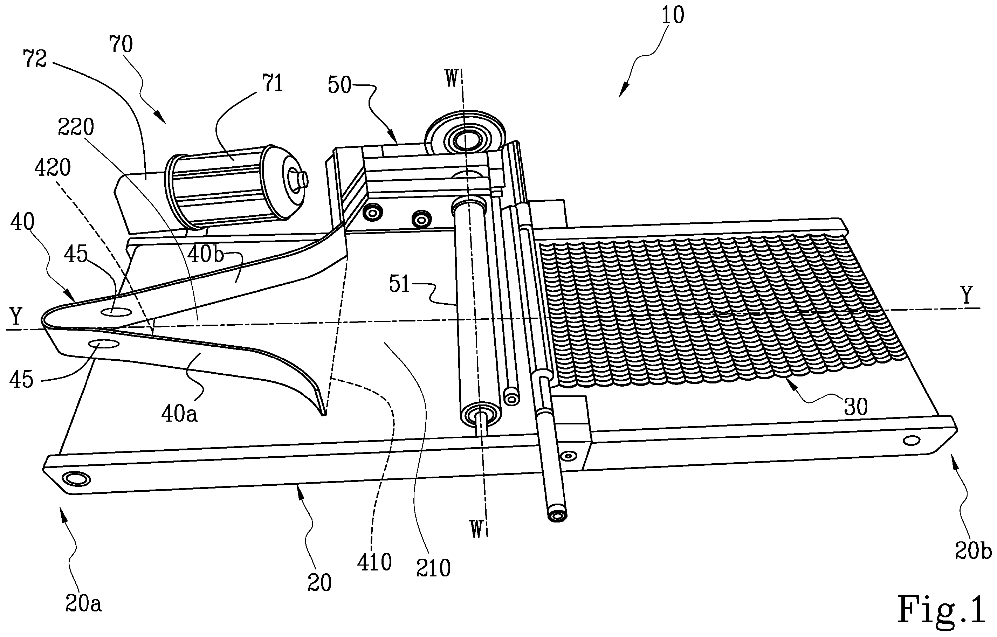

In accordance with the embodiment illustrated in the appended Figures 1-4, the orientation means 40 comprises a body, at least in part, counter-shaped to the piece P of food dough and oriented as a function of the predefined direction.

In the case illustrated in the appended figures, the body has a substantially wedge-shaped or "V-shaped" form - suitable therefore to accommodate the pieces P of food dough shaped in triangular strips - having an enlarged end 410 turned towards the receiving zone 210, and a tapered end 420 opposite to the enlarged end 410, i.e. arranged proximal to the first end 20a.

In other words, the body has a substantially funnel-shaped form, such as to obtain a shape coupling with each piece P of food dough.

As illustrated in Figure 1, according to an aspect of the invention, the body can preferably be obtained by means of a process of "V-shaped" bending of a metal band.

Otherwise, according to an embodiment of the invention not illustrated in the appended figures, the body has adjustable walls 40a, 40b so as to enlarge or narrow said enlarged end 410 and/or said tapered end 420.

In particular, such adjustable walls 40a, 40b are preferably arranged with each other so as to obtain a triangular accommodation profile (entirely similar to what has been described previously) and obtained respectively with metal bars movable reciprocally with each other so as to vary the inclination thereof with respect to the work axis Y-Y, in order to allow the orientation means 40 itself to accommodate pieces P of dough having multiple triangular dimensions.

In this manner, the tapered end 420 of the piece P of dough is inserted into the vertex of the "V" of the orientation means 40 and the sides of the piece of dough are aligned with the sides of the orientation means 40 so that the piece P of dough is perfectly oriented along the work axis Y-Y.

According to an embodiment of the invention not illustrated in the appended figures, the body of the orientation means 40 can preferably have a flat surface arranged substantially orthogonal to the work axis Y-Y (and not in a "V" as described before), and suitable for centring and/or orienting pieces of food dough having a square and/or rectangular shape for example.

In other words, the body can be shaped in a different form with respect to the wedge-shaped one previously described, in order to orient pieces P of dough having, for example, a square and/or rectangular shape.

According to an aspect of the invention, the orientation means 40 is arranged along the work axis Y-Y in a centreline position of the conveyor 20 (see Figures 1-4). In other words, the orientation means 40 is arranged astride the work axis Y-Y.

According to an aspect of the invention, the machine 10 comprises actuation means 70 connected to the conveyor 20 and selectively activatable between a centring configuration of each piece P of food dough, in which the conveyor 20 feeds the piece P of food dough from the receiving zone 210 to the centring zone 220, and a reversal configuration, in which the conveyor 20 slides in an opposite direction to the previous one after the piece P of food dough has been oriented.

Advantageously, the machine 10 according to the invention is compact and small in size, as it does not need large spaces, since, by reversing the movement of the conveyor 20, the extension in length needed by the conveyor 20 itself is reduced to the minimum. In other words, by reversing the movement of the conveyor 20, the space needed for operation of the machine 10 is reduced.

In addition, the machine 10 is advantageously flexible, since with the same conveyor 20 it is possible to perform several movements - in one direction and/or in the opposite direction - of pieces P of food dough.

According to an aspect of the invention, the actuation means 70 comprises preferably an electric motor 71, in particular of the asynchronous or brushless type, connected to the conveyor 20 at the first end 20a of the conveyor 20 itself, and configured to move it along the work axis Y-Y. Preferably, the actuation means 70 further comprises a gearbox 72 interposed between the motor 71 and the conveyor 20 and configured to connect them mechanically to modulate the speed of rotation and the torque transmitted by the motor to the conveyor 20 itself.

Preferably, the gearbox 72 is of the gear type, for example the angular type, or the worm screw type.

The motor 71 and the gearbox 72 just described briefly are well-known to a person skilled in the art and are therefore not further described in detail. According to an aspect of the invention, the actuation means 70 further comprises at least one electronic control unit (not illustrated in the appended figures) comprising:
- a receiving module, configured to receive electric and/or electronic signals,
- a processing module, configured to process the signals received,
- a sending module, configured to send the signals received.

According to an aspect of the present invention, the control unit is configured to move the conveyor 20 for a certain predefined time, also after the piece P of dough has been oriented thanks to the orientation means 40, so as to be certain that it is maintained oriented. Preferably, as will be better described below, the control unit is connected to a presence sensor 60 for detecting the presence of the piece P of dough at the orientation means 40, so as to detect when the piece P of dough effectively reaches the orientation position.

Advantageously, the electronic control unit also allows actuation means 70 to be operated to impart a movement of the conveyor 20 in one direction or in the opposite direction (in the case in which the orientation means 40 is arranged on the opposite side to the rolling up means 30 according to a direction of advancement of the conveyor 20 that goes from the receiving zone 210 to the centring zone 220). In accordance with the embodiment illustrated in the appended figures, the machine 10 further comprises calibration means 50 operatively associated with the conveyor 20, interposed between the orientation means 40 and the rolling up means 30, and configured to calibrate a thickness of at least one portion of each piece P of food dough before its rolling up, so as to obtain final pieces P of food dough wrapped with at least the aforesaid one portion having a predefined thickness.

More specifically, the term "calibration" means, according to the present description, a stretching of at least one portion of the piece P of food dough (in particular the tip or tail), and substantially similar to a rolling process, i.e. a thinning of a portion of the thickness of the piece P of food dough.

In addition, the calibration means 50 performs a crushing of the portion of the piece P of dough (in proximity to the tail or tip thereof) in order to reduce the thickness of the piece P itself substantially down to zero. In this manner, the subsequent rolling up of the piece P of dough on itself by means of the rolling up means 30, i.e. the connection of the crushed portion to the remaining portion of the piece P, is efficient and reliable.

Advantageously, the final confectionery products are perfectly formed and/or shaped, and substantially free of geometric malformations.

In accordance with the embodiment illustrated in the appended figures, the calibration means 50 comprises a roller 51 extending along a calibration axis W-W transverse with respect to the work axis Y-Y and configured to rotate around the calibration axis W-W itself.

Preferably, the roller 51 has a transverse section that is substantially cylindrical and constant along the entire extension thereof, and has a smooth surface obtained in a metallic material, in particular preferably in stainless steel, i.e. suitable for being used in a food environment (for example AISI 304, AISI 304L, AISI 3016 or AISI 3016L or similar). Otherwise, the surface of the roller 51 is preferably rubberised and made from a non-stick plastic material (for example, suitable for foodstuffs), so as to exert a friction force on at least part of the surface of each piece P of food dough, in order to calibrate it (i.e. flatten it/roll it).

Preferably, the surface of the roller 51 can comprise a coating material, wrapped around the roller 51 itself, preferably made from a non-stick cotton. According to an aspect of the invention not illustrated in the appended figures, the surface of the roller 51 can preferably be knurled or preferably have a plurality of projections or protuberances, so as to increase the friction force between the surface of the roller 51 itself and the portion of the piece P of food dough with which the roller 51 comes into contact. According to an aspect of the invention, the machine 10 comprises synchronisation means 52 connected to the roller 51 and configured to move it in a tilting manner towards and/or away from a surface of the conveyor 20.

In more detail, the roller 51 is tilting between a rest configuration in which the roller 51 is distal from the aforesaid surface of the conveyor 20, and a calibration configuration in which the same roller 51 is arranged proximal to said surface.

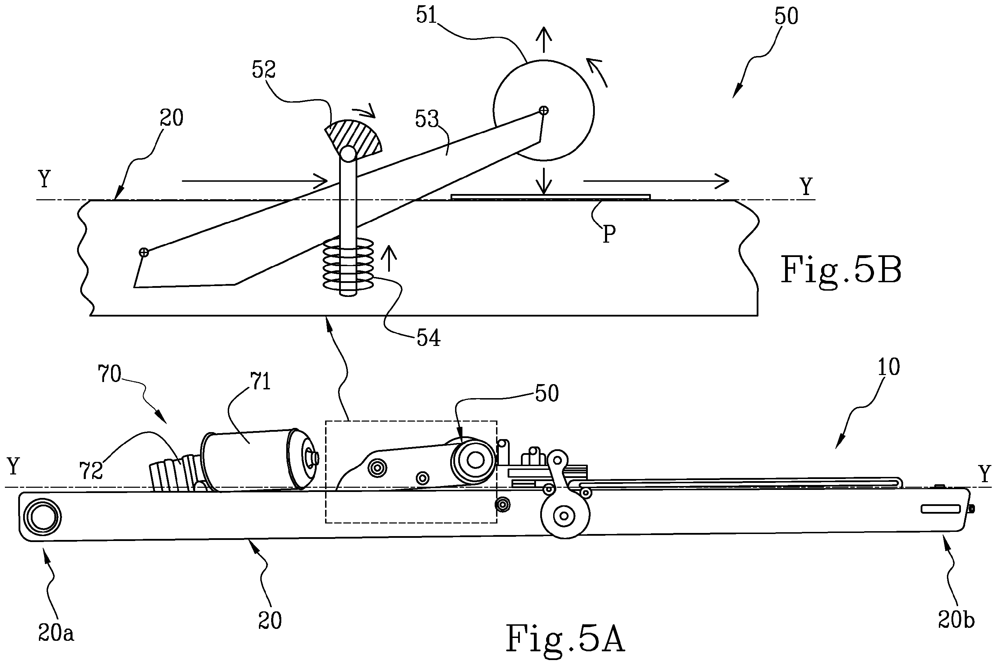

According to an aspect of the invention, the synchronisation means 52 comprises a mechanical cam (see Figure 5B) or an electronic cam, acting on the roller 51 to move it between the rest configuration and the calibration configuration and vice versa.

In other words, the synchronisation means 52 is cyclically active on the roller 51 which is, in turn, active on at least one portion of each piece P of food dough.

In accordance with the embodiment illustrated in detail in Figure 5B, the calibration means 50 comprises an oscillating arm 53, rotatably connected at one end thereof to the conveyor 20.

According to the embodiment illustrated in the figure, the oscillating arm 53 is arranged laterally to the conveyor 20 and oscillates on a plane substantially orthogonal to the surface of the conveyor 20 itself. The oscillating arm 53 is connected to the roller 51 so as to obtain a structure of the cantilevered type, and substantially "L"-shaped.

The synchronisation means 52, in particular the mechanical cam in the case specifically illustrated in Figure 5B, are cyclically active on the oscillating arm 53 so as to confer said tilting movement to the roller 51 itself.

The calibration means further comprises elastic return means, for example a spring 54, configured to generate an elastic recall force acting on the roller 51, such as to move the roller 51 from the calibration configuration proximal to the surface of the conveyor 20, towards the rest configuration distal from said surface.

According to an aspect of the invention, the calibration performed by the aforesaid calibration means 50 occurs by means of the tilting action of the roller 51 on at least one portion of each piece P of food dough during a crossing thereof of the roller 51 itself, and before crossing the rolling up means 30.

According to an aspect of the invention, the machine 10 comprises detection means (not illustrated in the appended figures) for detecting the position of the piece P of dough on the conveyor 20 along the work axis Y-Y.

In particular, the aforesaid detection means is associated with the roller 51 to activate the tilting movement of the roller 51 itself, as a function of detection of the position of the piece P of dough detected by the aforesaid detection means.

In other words, the detection means detects the presence of each piece P of dough when it transits in proximity to the roller 51,
so as to crush at least one part of each piece P of dough (preferably the tail or tip) that will form the lower zone of the croissant or the brioche once it has been rolled up.

In other words, the roller 51 is moved from the rest configuration to the calibration configuration during passage of the piece P of dough so as to press on one part thereof (preferably the tail or tip), crushing it towards the conveyor 20 in order to flatten it more with respect to the rest of the piece P.

This aspect is advantageous in that it allows to obtain a part with reduced cross-section of the piece P of dough that is rolled up, so as to reduce the overall dimensions thereof on the entire rolled-up product.

According to an aspect of the invention, illustrated in particular in Figures 2-4, the machine 10 comprises a further presence sensor 60 connected to the conveyor 20 and configured to detect the presence of a piece P of food dough in the centring zone 220.

In other words, the aforesaid presence sensor 60 detects the presence of a piece P of dough in a centring configuration thereof, i.e. coupling with the aforesaid orientation means 40.

The conveyor 20 is configured to pass from the centring configuration to the reversal configuration following detection of the presence of the piece P of food dough by the presence sensor 60.

In other words, the conveyor 20 reverses its own direction of movement when a piece P of dough is coupled with the orientation means 40 so as to impart to the piece P itself a movement along a direction opposite to the orientation means 40, i.e. towards the second end 20b of the conveyor 20. According to an aspect of the invention, the presence sensor 60 comprises an emitter and a receiver of a presence signal, each arranged preferably respectively in a lateral position to the conveyor 20 and aligned with each other along a detection direction orthogonal to the work axis Y-Y (see Figures 2-4). For example, said sensor 60 can be arranged laterally and the partition walls of the orientation means 40 have a passage window 45 so that the sensor checks for the presence of the piece P of dough inside the orientation means 40.

According to an embodiment of the invention not illustrated in the appended figures, the presence sensor 60 is arranged in a raised position with respect to the orientation means 40, so as to emit a presence signal along a longitudinal direction substantially orthogonal to the surface of the conveyor 20.

In accordance with the embodiment illustrated in the appended figures, the rolling up means 30 is arranged upstream of the orientation means 40 according to a direction of advancement of the conveyor 20 substantially parallel to the work axis Y-Y towards the centring zone 220 (i.e. having a direction from the second end 20b towards the first end 20a).

Otherwise, in an alternative embodiment of the present invention, the rolling up means 30 is arranged downstream of the orientation means 40 according to the direction of advancement itself, in approach towards the centring zone 220.

In more detail, the rolling up means 30 comprises a fixed mat with respect to the conveyor 20 and arranged opposite to it, so as to define a rolling up tunnel in which each piece P of food dough is wrapped around itself through friction against said mat while crossing it.

As illustrated in the appended figures, the mat is substantially static during operation of the machine 10, and has a planar shape having a substantially square or rectangular extension (according to a top plan view).

Preferably, the mat is connected to the conveyor 20 along one side thereof, maintaining the remaining sides free.

Preferably, the mat is of the flexible type and comprises a plurality of meshes connected to each other so as to create a net or a grid. In other words, the mat has a flexibility entirely similar to a fabric.

Preferably, the mat can be made of a metallic material or a polymeric material.

A further object of the present invention is also a method for rolling up a piece P of food dough that derives directly from what is described above in relation to the machine 10, which is intended as referenced here below, for which the same numerical references will be retained for the sake of descriptive simplicity.

In more detail, the method according to the invention comprises a conveyor 20 extending and movable along a work axis Y-Y. In detail, the conveyor 20 comprises a receiving zone 210 for receiving the piece P of food dough, and a centring zone 220 for centring the same piece P.

The method further comprises rolling up means 30 associated with the conveyor 20, and configured to perform a wrapping of the food dough. The method comprises the following operating steps:
- preparing a piece P of food dough in said receiving zone 210;
- moving the conveyor 20 in accordance with a sliding direction;
- centring the piece P of dough by means of orientation means 40 so as to orient it according to said predefined direction by means of a combined movement of an impact and/or a sliding against said orientation means 40.

Furthermore, according to the preferred embodiment of the present invention in which the rolling up means 30 is arranged upstream of the orientation means 40 (as described above - considering the direction of the second end 20b towards the first end 20a), the method provides for the following further steps:
- reversing the movement of the conveyor 20;
- rolling up the centred piece P of dough with the rolling up means 30 so as to obtain a rolled up piece P of food dough.

Otherwise, according to the alternative embodiment of the present invention in which the rolling up means 30 are arranged downstream of the orientation means 40 (as described above - considering the direction of the second end 20b towards the first end 20a), the method provides for the following further steps:
- not reversing the movement of the conveyor 20;
- raising or moving the orientation means 40 so that the piece P of dough moves beyond it;
- rolling up the centred piece P of dough with the rolling up means 30 arranged downstream of the orientation means 40.

Preferably, the method comprises the further operating step of calibrating the piece P of food dough by means of calibration means 50. In particular, the calibration means 50 is selectively movable in a tilting manner towards and/or away from a surface of the conveyor 20.

Preferably, the method comprises the further operating step of raising the orientation means 40 with respect to a surface of the conveyor 20 and advancing the piece P of food dough so that it goes beyond the orientation means 40 itself.

With reference to the appended figures, operation of the invention is as follows.

Each piece P of food dough is transported in proximity to the conveyor 20 and made to fall by force of gravity onto the surface of the conveyor 20, starting from a raised position with respect to the conveyor 20 itself.

Each piece P of food dough falls onto the surface of the conveyor 20 and assumes a substantially random orientation, for example such as the one illustrated in Figure 2.

The piece P of dough is then moved by the conveyor 20 along the work axis Y-Y towards the first end 20a.

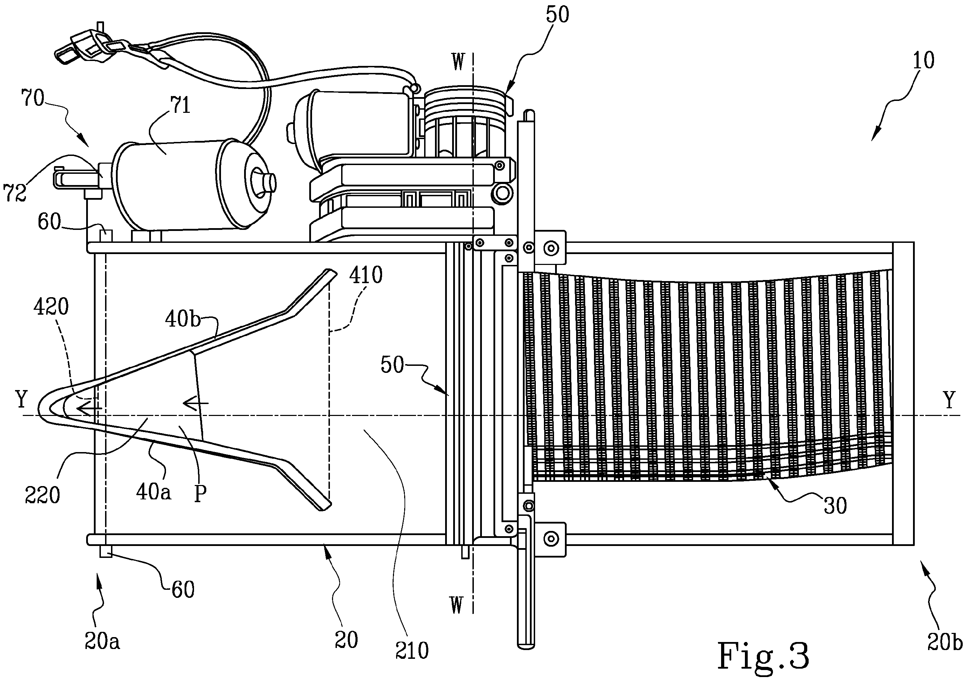

The piece P of dough, during its movement, impacts and slides against the walls 40a, 40b of the body of the orientation means 40, so as to wedge inside the body itself until it substantially reproduces the "V" shape thereof. As illustrated in Figure 3, such coupling configuration corresponds with a centring of the piece P of dough.

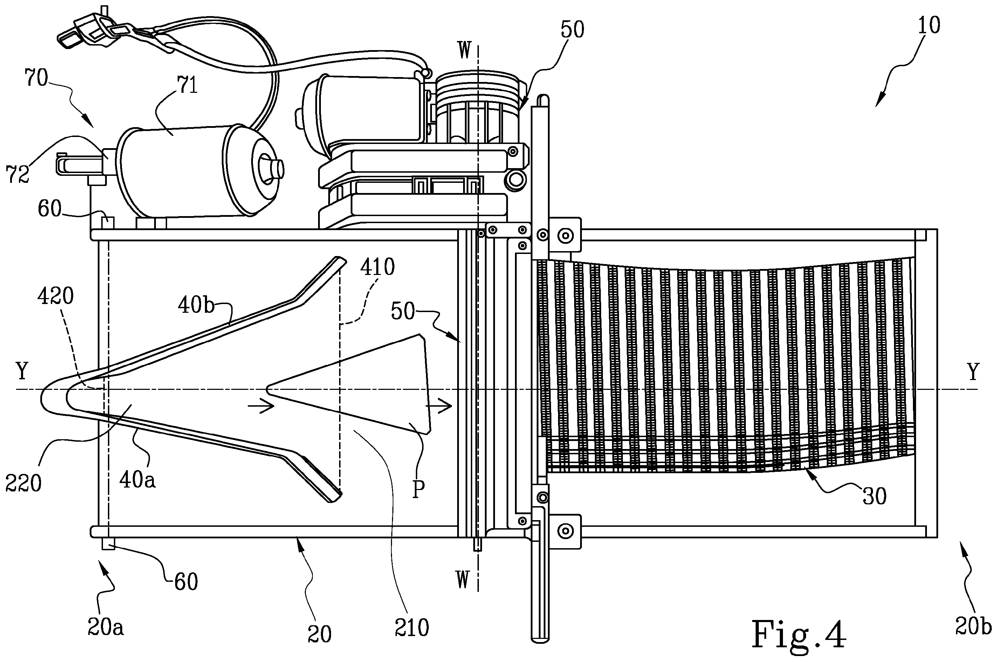

Subsequently, the movement of the piece P of dough is reversed, by means of a reversal of motion of the conveyor 20, and said piece P of dough is therefore moved towards the second end 20b of the conveyor 20 (see Figure 4).

Subsequently, the piece P of dough, in particular at least one portion thereof, is calibrated by the calibration means 50, in particular preferably crushed or flattened by means of the action of the roller 51, at a tip or tail portion thereof, so as to assume a reduced thickness, at the limit substantially close to zero.

In conclusion, the calibrated piece P of dough is transported through the rolling up means 30 and then rolled up on itself by means of the action of a friction force that is produced by a relative sliding of the piece P of food dough against the rolling up means 30 itself.

The present invention obtains the aforementioned advantages. In particular, the present invention allows a machine for rolling up pieces P of food dough to be obtained that is:
- compact and/or small in size, since it does not require long conveyor belts intended for moving the aforesaid pieces P of dough, as it allows the movement of the conveyor to be reversed in one direction and/or in the opposite direction, recovering a considerable extension of the conveyor itself;
- capable of obtaining final confectionery products that are substantially identical to each other and substantially free of defects in their shape and/or geometry;
- economical or at least has a competitive sale price on the market, i.e. at least lower than for the machines of the prior art. The result is a use of the machine 10 ideal for pastry shops and confectionery production environments of the artisanal type.

## Claims

1. A machine (10) for rolling up pieces (P) of food dough, in particular croissants and/or brioches, comprising:
- a conveyor (20) extending and movable along a work axis (Y-Y) and comprising a receiving zone (210) of the piece (P) of food dough, and a centring zone (220) of the same piece (P);
- rolling up means (30) associated with the conveyor (20), and configured to receive and roll up each centred piece (P) of dough on itself, so as to achieve a wrapping of the food dough;
- orientation means (40) associated with said conveyor (20), positioned in said centring zone (220), and configured to accommodate a piece (P) of food dough to orient it according to a predefined direction; said conveyor (20) being configured to transport the piece (P) of food dough arranged in said receiving zone (210) towards said orientation means (40) so as to orient it according to the predefined direction by means of a combined movement of an impact and/or a sliding against said orientation means (40);
**characterised in that** said orientation means (40) comprises a body, at least in part, counter-shaped to the piece (P) of food dough and oriented as a function of said predefined direction; and wherein said body has a substantially wedge-shaped or "V-shaped" form, having an enlarged end (410) turned towards said receiving zone (210), and a tapered end (420) opposite the enlarged end (410), so as to obtain a shape coupling between said body and each piece (P) of food dough in order to orient the latter.

2. The machine (10) according to claim 1, wherein said body has adjustable walls (40a, 40b) so as to enlarge or narrow said enlarged end (410) and/or said tapered end (420).

3. The machine (10) according to any one of the preceding claims, wherein said orientation means (40) is arranged along said work axis (Y-Y) in a centreline position of the conveyor (20).

4. The machine (10) according to any one of the preceding claims, comprising actuation means connected to the conveyor (20) and selectively activatable between a centring configuration of each piece (P) of food dough, in which the conveyor (20) feeds the piece (P) of food dough from the receiving zone (210) to the centring zone (220), and a reversal configuration, in which the conveyor (20) slides in a direction opposite to the previous one after said piece (P) of food dough is oriented.

5. The machine (10) according to any one of the preceding claims, comprising calibration means (50) operatively associated with the conveyor (20), interposed between said orientation means (40) and said rolling up means (30), and configured to calibrate a thickness of at least one portion of each piece (P) of food dough before its rolling up, so as to obtain final pieces (P) of food dough wrapped with at least said one portion having a predefined thickness.

6. The machine (10) according to any one of the preceding claims, wherein said calibration means (50) comprises a roller (51) extending along a calibration axis (W-W) transverse with respect to said work axis (Y-Y) and configured to rotate around said calibration axis (W-W).

7. The machine (10) according to claim 6, wherein said roller (51) has a smooth surface made in a metal material or a rubberised surface made in a non-stick plastic material.

8. The machine (10) according to claim 6 or 7, comprising synchronisation means connected to said roller (51) and configured to move it, preferably in a tilting manner, towards and/or away from a surface of the conveyor (20), between a rest configuration in which the roller (51) is distal from said surface; and a calibration configuration in which the same roller (51) is arranged proximal to said surface.

9. The machine (10) according to one of claims 6 to 8, wherein said synchronisation means comprises a mechanical cam or an electronic cam, acting on said roller (51) to move it between the rest configuration and the calibration configuration and vice versa.

10. The machine (10) according to any one of the preceding claims, comprising detection means of the position of the piece of dough on the conveyor along the work axis (Y-Y);
said detection means being associated with said roller (51) to activate the tilting movement of said roller (51) as a function of detection of the position of the piece (P) of dough detected by said detection means.

11. The machine (10) according to any one of the preceding claims, comprising a presence sensor (60) connected to the conveyor (20) and configured to detect the presence of a piece (P) of food dough in the centring zone (220);
said conveyor (20) being configured to pass from the centring configuration to the reversal configuration following detection of the presence of the piece (P) of food dough by the presence sensor (60).

12. The machine (10) according to claim 11, wherein said presence sensor (60) is arranged in a raised position with respect to the orientation means (40), so as to emit a presence signal along a longitudinal direction substantially orthogonal to the conveyor surface (20).

13. The machine (10) according to any one of the preceding claims, wherein said rolling up means (30) is arranged upstream of the orientation means (40) according to a direction of advancement of the conveyor (20) substantially parallel to the work axis (Y-Y) towards the centring zone (220); or said rolling up means (30) being arranged downstream of the orientation means (40) according to said same direction of advancement, towards the centring zone (220).

14. The machine (10) according to any one of the preceding claims, wherein said rolling up means (30) comprises a fixed mat with respect to the conveyor (20) and arranged opposite to it so as to define a rolling up tunnel in which each piece (P) of food dough is wrapped around itself through friction against the same mat while crossing it.

15. A method for rolling up a piece (P) of food dough comprising:
- arranging a conveyor (20) extending and movable along a work axis (Y-Y), said conveyor (20) comprising a receiving zone (210) of the piece (P) of food dough, and a centring zone (220) of the same piece (P);
- arranging rolling up means (30) associated with the conveyor (20), and configured to perform a wrapping of the food dough;
said method comprising the following operating steps:
- arranging orientation means (40) associated with said conveyor (20), positioned in said centring zone (220), and configured to accommodate a piece (P) of food dough to orient it according to a predefined direction;
- positioning a piece (P) of food dough in said receiving zone (210);
- moving the conveyor (20) in accordance with a sliding direction that goes towards the centring zone (220);
- centring the piece of dough (P) by means of orientation means (40) so as to orient it according to said predefined direction by means of a combined movement of an impact and/or a sliding against said orientation means (40);
- reversing the motion of the conveyor (20) so as to move the piece (P) of dough towards said rolling up means (30) to roll up said piece (P) of dough on itself.
